# EUROPEAN PATENT APPLICATION

(11) **EP 4 489 145 A1**
(43) Date of publication of application: **08.01.2025**
(21) Application number: 23851767.6
(22) Date of filing: 07.08.2023
(51) Int. Cl.: H01M 4/66, H01M 4/70, H01M 4/80, H01M 50/609, H01M 50/531, H01M 50/342, H01M 10/052

(54) **CURRENT COLLECTOR DISC AND BATTERY**

(30) Priority: 08.08.2022 CN 202222089899 U
(71) Applicant: Eve Power Co., Ltd., Jingmen, Hubei 448000 (CN)
(72) Inventor: CHEN, Min, Jingmen, Hubei 448000 (CN); HUANG, Liming, Jingmen, Hubei 448000 (CN); WANG, Zhiming, Jingmen, Hubei 448000 (CN)
(74) Representative: Murgitroyd & Company
(86) International application number: PCT/CN2023/111462
(87) International publication number: WO 2024/032546

(57) **Abstract**

The present disclosure discloses a current collector disk and a battery. The current collector disk includes a disk body on which a plurality of infiltration holes is provided. The infiltration holes penetrate through the disk body in a direction of a thickness of the disk body. The disk body has a first side surface and a second side surface which are oppositely disposed. The first side surface is recessed with a plurality of grooves. At least one end of each of the plurality of grooves communicates with a respective one of the plurality of infiltration holes.

## Description

The present application claims priority to Chinese Patent Application No. 202222089899.1 filed with China National Intellectual Property Administration on August 8, 2022, the content of which is incorporated herein by reference in its entirety.

### TECHNICAL FIELD

The present disclosure relates to the field of lithium batteries, for example, to a current collector disk, and a battery including the current collector disk.

### BACKGROUND

In a cylindrical lithium ion battery, a current collector disk serves to collect currents. It has been found that the structure design of the current collector disk is strongly related to safety of a cell, and the related art employs an integrated welding of the current collector disk to a surface of a pole piece of the cell. Under a condition that the cell undergoes thermal runaway, the current collector disk is disk deformed with the cell and becomes stuck at a pressure-relief opening, preventing active materials and gases inside the cell from being released in a timely manner, thereby causing the battery to experience thermal runaway, leading to safety issues such as fire and explosion.

### SUMMARY

The present disclosure provides a current collector disk that enables the cell to release pressure in a timely manner.

The present disclosure provides a battery having a good quality and a high safety factor.

In a first aspect, an embodiment of the present disclosure provides a current collector disk including a disk body on which a plurality of infiltration holes is provided, the plurality of infiltration holes extending through the disk body in a direction of a thickness of the disk body, the disk body having a first side surface and a second side surface disposed oppositely, the first side surface being recessed with a plurality of grooves, at least one end of each of the plurality of grooves communicating with a respective one of the plurality of infiltration holes.

In a second aspect, an embodiment of the present disclosure provides a battery including the current collector disk as described above.

### BENEFICIAL EFFECT

The beneficial effects of the present disclosure are as follows. The current collector disk of the present disclosure is provided with grooves. Under a condition that the cell experiences a safety failure, excessive gas production or expansion within the cell occurs, the disk body is squeezed and deformed. Due to the lower strength of the grooves, a portion of the disk body corresponding to the bottom of the grooves is prone to rupture, which may provide space for the cell expansion. The infiltration holes are hole structures provided on the disk body. Under a condition that the disk body is subjected to external forces, the periphery of the infiltration holes is prone to stress concentration. Connecting the grooves with the infiltration holes allows the grooves to be located in areas of the disk body where stress concentration occurs. Under a condition that the cell expands, the portion of the disk body corresponding to the bottom of the grooves may be quickly torn, ensuring that the internal pressure of the battery may be released in a timely manner.

### BRIEF DESCRIPTION OF THE DRAWINGS

The present disclosure is described in further detail below with reference to the accompanying drawings and embodiments.
FIG. 1 is a schematic diagram of a current collector disk according to an embodiment of the present disclosure.
FIG. 2 is a schematic cross-sectional view taken along A-A of FIG. 1.

In the drawings:
1. disk body; 11. first side surface; 12. second side surface; 2. infiltration hole; 21. first hole; 22. second hole; 3. groove; 31. first groove; 32. second groove; 4. infiltration notch.

### DETAILED DESCRIPTION

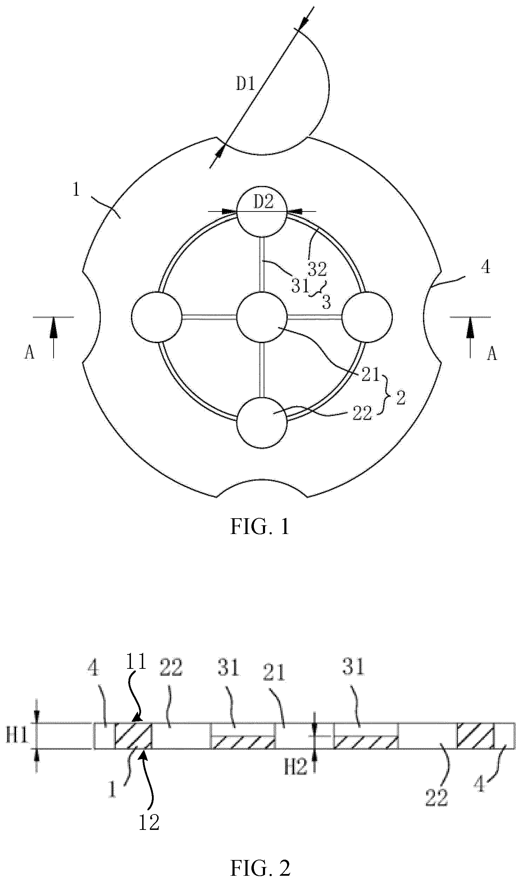

As shown in FIGS. 1 and 2, according to the present disclosure, a current collector disk includes a disk body 1 on which a plurality of infiltration holes 2 is provided for accelerating the infiltration of active substances by electrolytes. The plurality of infiltration holes 2 extend through the disk body 1 in a direction of a thickness of the disk body 1. The disk body 1 has a first side surface 11 and a second side surface 12 which are oppositely disposed. The first side surface 11 is recessed with a plurality of grooves 3. At least one end of each of the plurality of grooves 3 communicates with a respective one of the plurality of infiltration holes 2. By providing the groove 3, under a condition that a cell experiences a safety failure, the cell is deformed. The cell expands towards a direction of a pressure-relief channel, causing the disk body 1 to be squeezed and deformed. At this point, due to the lower strength of the grooves 3, a portion of the disk body 1 corresponding to the bottom of the grooves 3 is prone to rupture, which may provide space for the cell expansion. The current collector disk is deformed along with the cell, effectively alleviating the issue of the current collector disk blocking the pressure-relief channel. It may be understood that the infiltration holes 2 are hole structures provided on the disk body 1. Under a condition that the disk body 1 is subjected to external forces, the periphery of the infiltration holes 2 is prone to stress concentration. Connecting the grooves 3 with the infiltration holes 2 allows the grooves 3 to be located in areas of the disk body 1 where stress concentration occurs. Under a condition that the cell is deformed, the portion of the disk body 1 corresponding to the bottom of the grooves 3 may be quickly torn, ensuring that the internal pressure of a battery may be released in a timely manner.

In the present embodiment, the infiltration holes 2 include a first hole 21 and a plurality of second holes 22. The first hole 21 is located at a center of the disk body 1. The plurality of second holes 22 are arranged at intervals in a circumferential direction of the first hole 21. The grooves 3 includes a plurality of first groove 31, one end of each of the plurality of first grooves 31 communicating with the first hole 21 and another end of the first groove 31 communicating with a respective one of the plurality of second holes 22. In the present embodiment, the second holes 22 are evenly arranged in the circumferential direction of the first holes 21, so that the electrolytes may evenly flow into an inside of the cell, a contact area between the electrolytes and the cell is ensured, and an infiltration efficiency of the electrolytes is improved. By configuring the two ends of each of the first grooves 31 to be connected to the first hole 21 and the second hole 22 respectively, the disk body 1 has a weakened area extending from the center to an edge, ensuring that under a condition that the cell is deformed, the portion of the disk body 1 corresponding to the bottom of the grooves 3 may be torn. The number of grooves 3 may be adjusted according to the number of second holes 22 as needed.

Referring to FIG. 1, the second holes 22 are provided with four. Accordingly, the first grooves 31 are provided with four. The first grooves 31 are each bar-shaped, and the four first grooves 31 are arranged in a "cross" shape. By providing the bar-shaped first grooves 31, under a condition that the cell is deformed, ends of the first grooves 31 adjacent to the first hole 21 are first torn, and cracks may be gradually extended along lengthwise directions of the first grooves 31 in straight lines, which may ensure that the weakened area of the current collector disk is torn in a timely manner, and the internal pressure may be effectively released.

In the present embodiment, the current collector disk is a negative current collector disk, and the disk body 1 is made of metal. In the present embodiment, the grooves 3 further includes a plurality of second grooves 32, and two adjacent ones of the plurality of second holes 22 communicate through a respective one of the plurality of second grooves 32. Under a condition that the cell is deformed, an area of a middle portion of the disk body 1 is flanged with an outward movement of the cell, so that the middle portion of the disk body 1 may form the pressure-relief channel to provide space for the expansion of the cell. The second grooves 32 are provided, so that the middle portion of the disk body 1 may be flanged more easily. Under a condition that the cell is deformed, the area of the middle portion of the disk body 1 may be flanged, presenting a "blossoming" phenomenon, which enables the pressure to be released in a timely manner. In other embodiments, the number of the second holes 22 is not limited to four. In one embodiment, the number of the second holes 22 is from three to six in order to ensure an electrolyte injection rate.

In one embodiment, the second grooves 32 are each arcuate. By providing the arcuate second grooves 32, the second grooves 32 each protrude toward one side away from the center of the disk body 1, and during processing, a tool similar to a compass pattern may be used for scribing, with one end of the tool being fixed, and another end of the tool being rotated around the fixed end for scribing. In other embodiments, the second grooves 32 may each have other shapes, for example, a linear shape, a corrugated shape, a broken line shape, and the like. The second grooves 32 may have indefinite shapes, and it is only necessary to ensure that the second grooves 32 communicates with the second holes 22. The arcuate second grooves 32 in the present embodiment is a preferred structure.

In the present embodiment, at least three grooves 3 are provided. In the present embodiment, the first grooves 31 and the second grooves 32 are each provided with four, and all the second grooves 32 enclose a circle. By providing the plurality of first grooves 31 and the plurality of second grooves 32, under a condition that the cell is deformed, the middle portion of the disk body 1 is prone to deformation when subjected to pressure, so that the pressure-relief channel is formed in the disk body 1, and pressure relief is performed in a timely manner. In other embodiments, the second grooves 32 are not limited to an arcuate shape, but may each have a linear shape, a broken line shape, a corrugated shape, and the like.

Referring to FIG. 2, in the present embodiment, the grooves 3 are provided on the first side face 11 of the disk body 1. The thickness of the disk body 1 is H1, a distance between a bottom of the grooves 3 and the second side face 12 of the disk body 1 is H2, and 0.2≤H2/H1≤0.8. By defining a thickness of H2, it is possible to avoid that a local thickness of the current collector disk is too small, to ensure the strength of the current collector disk, and to avoid that the local thickness of the current collector disk is too thin to cause breakage of the current collector disk during installation. In the present embodiment, depths of the first grooves 31 and the second grooves 32 may be the same or different, and it is only necessary to ensure that the depths of the first grooves 31 and the second grooves 32 are in respective ranges.

Referring to FIG. 1, in one embodiment, an edge of the disk body 1 is recessed with infiltration notches 4. By providing the infiltration notches 4, the electrolytes may flow to the cell along an inner wall of a housing, thereby increasing an infiltration rate of the electrolytes.

In the present embodiment, the infiltration notches 4 are arcuate. A diameter of each of the infiltration notches 4 is D1. The first holes 21 and the second holes 22 are circular holes. A diameter of each of the first holes 21 and the second holes 22 are D2 and D1>D2. Because the edge of the current collector disk is connected to the housing, a larger diameter is required for the liquid injection provided at the edge of the current collector disk, so that a cross-sectional dimension of the infiltration notches 4 may be ensured, and the electrolytes may smoothly flow to the cell.

In the present embodiment, each of the second holes 22 is correspondingly provided with one infiltration notch 4. When the electrolytes are injected into the battery, under a condition that the injection rate of the electrolytes is greater than a flow rate of the electrolytes in the infiltration holes 2, a portion of the electrolytes is accumulated on the current collector disk. Correspondingly providing each of the second holes 22 with one infiltration notch 4 allows the electrolytes collected around the second holes 22 to flow to the cell through the infiltration notches 4 in a timely manner, thereby shortening a flow path of the electrolytes and improving the injection efficiency.

Of course, in other embodiments, the shapes of the first holes 21 and the second holes 22 are not limited to a circular shape, and the cross-section of the infiltration holes 2 may be circular, square or polygonal. The number of the infiltration notches 4 and the number of the infiltration holes 2 are preferably three to six. In the present embodiment, the infiltration notches 4 are provided with five and the infiltration holes 2 are provided with four.

The present embodiment also provides a battery including a current collector disk in any of the above described embodiments. In a normal use state, the current collector disk is not deformed, and therefore the battery using the current collector disk has a good quality. Under a condition that the cell is deformed, the grooves 3 on the current collector disk may be torn by a deformation force of the cell, and the pressure generated by the cell may be released in a timely manner. Therefore, the cell safety factor of the current collector disk is high, and thermal runaway failure is not easy to occur.

## Claims

1. A current collecting disk comprising a disk body on which a plurality of infiltration holes is provided, the plurality of infiltration holes extending through the disk body in a direction of a thickness of the disk body, the disk body having a first side surface and a second side surface which are disposed oppositely, the first side surface being recessed with a plurality of grooves, and at least one end of each of the plurality of grooves communicating with a respective one of the plurality of infiltration holes.

2. The current collector disk of claim 1, wherein the plurality of infiltration holes includes a first hole and a plurality of second holes, the first hole being located at a center of the disk body, the plurality of second holes being arranged at intervals in a circumferential direction of the first hole, wherein the grooves include a plurality of first grooves, one end of each of the plurality of first grooves communicating with the first hole and another end of the first groove communicating with a respective one of the plurality of second holes.

3. The current collector disk of claim 2, wherein the grooves further include a plurality of second grooves, two adjacent ones of the plurality of second holes communicating through a respective one of the plurality of second grooves.

4. The current collector disk of claim 3, wherein the second grooves are each arcuate, the second grooves each protruding toward one side away from the center of the disk body.

5. The current collector disk of claim 2, wherein the first grooves are each bar-shaped.

6. The current collector disk of claim 1, wherein the thickness of the disk body is H1, a distance between a bottom of the grooves and the second side surface is H2, and 0.2≤H2/H1≤0.8.

7. The current collector disk of claim 1, wherein an edge of the disk body is recessed with infiltration notches.

8. The current collector disk of claim 7, wherein the infiltration notches are arcuate, a diameter of each of the infiltration notches is D1, the infiltration holes are circular, a diameter of each of the infiltration holes is D2, and D1>D2.

9. The current collector disk of claim 7, wherein the plurality of infiltration holes includes a first hole and a plurality of second holes, the first hole being located at a center of the disk body, the plurality of second holes being arranged at intervals in a circumferential direction of the first hole, each of the second holes being correspondingly provided with one of the infiltration notches.

10. A battery comprising the current collector disk of any one of claims 1 to 9.
